(19)

Europäisches Patentamt
European Patent Office
Office européen des brevets

(11) **EP 3 355 264 A1**

(12) **EUROPEAN PATENT APPLICATION**
published in accordance with Art. 153(4) EPC

(43) Date of publication:
**01.08.2018 Bulletin 2018/31**

(21) Application number: **16848086.1**

(22) Date of filing: **19.09.2016**

(51) Int Cl.:
***G06Q 50/30*** (2012.01)

(86) International application number:
**PCT/CN2016/099396**

(87) International publication number:
**WO 2017/050205 (30.03.2017 Gazette 2017/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.09.2015 CN 201510603573**

(71) Applicant: **Chigoo Interactive Technology Co., Ltd.**
**Xinwu District**
**Wuxi**
**Jiangsu 214028 (CN)**

(72) Inventors:
• **CHEN, Tao**
**Wuxi**
**Jiangsu 214028 (CN)**
• **WANG, Xinheng**
**Wuxi**
**Jiangsu 214028 (CN)**
• **LEI, Ming**
**Wuxi**
**Jiangsu 214028 (CN)**
• **ZHENG, Chengming**
**Wuxi**
**Jiangsu 214028 (CN)**

(74) Representative: **Papa, Elisabetta**
**Società Italiana Brevetti S.p.A**
**Piazza di Pietra, 39**
**00186 Roma (IT)**

(54) **INFORMATION PROMPT METHOD AND MOBILE SERVICE TERMINAL USED FOR PUBLIC PLACE**

(57) Disclosed is an information prompting method for a public place, including: acquiring user (S101) information, storing the user information in a user database, the user information being attributed into different target user group data packets based on a user's characteristic attributes; planning (SI02) a first route to a predetermined destination, estimating a first time period (T1) needed for completing the first route according to the characteristic attributes of the users within the target user group, acquiring user movement information within the first time period (T1), planning a second route and estimating (SI04) a second time period (T2) needed for completing the second route; and prompting (S105) the user for the planned first and second routes and the estimated time. Also disclosed is a mobile service terminal. The present invention can provide users with information prompts, adjust the prompted service in real time when environment changes, which better satisfies users.

Fig. 1

## Description

## TECHNICAL FIELD

The present invention relates to the field of information processing, and more particularly to an information prompting method for a public place and mobile service terminal.

## BACKGROUND

At present, services to public service establishments (e.g. airports, train stations, exhibition halls, shopping malls, etc.) are mainly guidance services for the public, such as manual guidance, signage guidance and broadcast guidance. However, it is often for people to deal with matters only at a predetermined timing while freely arranging the rest of the time. For example, a flight taken by a user in an airport takes off at 2:00 pm and will take off from boarding gate A. When the user is unfamiliar with the route from his current location to the boarding gate, it is difficult to determine when to proceed to the boarding gate. The user often needs to go to the airport as early as possible while keeping an eye on environmental changes in real time to avoid missing boarding time. Moreover, people may encounter a great deal of trouble caused by, e.g., boarding gate changes, flight delay or other environmental changes.

The applicant has conducted in-depth and extensive research and development work on public services and applied for a number of patents, such as Chinese invention patent application No. 201410653839.5 entitled Airport Mobile Self-service Method and System, Chinese design patent No. 201430296729.9 entitled Multimedia Trolley, and Chinese utility model patent No. 201320012580.7 entitled Trolley for Carrying Electronic Device and Charging Device, . Self-service products in a terminal building that can be installed on a trolley can present a user with personal flight information and provide the user with an airport information service. However, the user needs more personalized services with better user experience.

## SUMMARY

In view of the above, an information prompting method for a public place is proposed according to an aspect of the present invention, which includes: acquiring user information, and categorizing a user into a target user group according to the user information; planning a first route to a predetermined destination, and estimating a first time period (T1) needed for completing the first route according to the user information corresponding to the users within the target user group; prompting the user for the planned first route and the first estimated time; acquiring user's movement information, planning a second route, and estimating a second time period (T2) needed for completing the second route according to the user movement information; and prompting the user for the planned second route and the second estimated time.

In some embodiments, the public place is an airport, the predetermined destination is a boarding gate, and the method may further include: displaying and/or broadcasting the remaining planned route distances and/or altered boarding gates and/or modified takeoff time and/or remaining time from takeoff in real time, and navigating the user.

According to another aspect of the present invention, a mobile service terminal is proposed. The mobile service terminal includes: a collection module configured to collect user information; an interface module configured to perform data exchange with an external device according to the collected user information to acquire user database and/or resource information; a storage module configured to store the user information; and a service push module configured to plan a first route to a predetermined destination for the user, to estimate a first time period needed for completing the first route, and to plan a second route during the travel of the first route, to estimate a second time period (T2) needed for completing the second route; and to prompt in real time for the remaining movement distance and/or the time needed in the walking route, and to navigate the user.

According to the above solution, a user can be provided with more accurate and predictive information prompts, and the content of the prompt service can be adjusted in real time, which helps the user to plan routes and activities, improving the user's convenience and satisfaction.

When the public place is an airport and the destination is a boarding gate, the user's identity information is acquired and added to a user database. As the collected user information increases, the user database is updated in real time, which makes the mobile service terminal keep rich and continuously updated information. A relatively high accuracy of acquiring the average movement speed of a target user group to which the user belongs based on the average movement speed (such as the walking speed) of each user in the target user group can be obtained, hence the accuracy of the estimated time from the user's current location to the boarding gate will also be higher. Thus where the user's movement information has not been acquired in the initial stage or the acquired user movement information is not enough to accurately estimate the average movement speed of the user, the time needed for the user to the destination can be calculated according to the average speed of the users in the target user group to which the user belongs so as to provide the user with a preliminary prompt so that the user can reasonably arrange his/her time according to the prompt, thereby improving user experience. Then the user's own average movement speed will be collected. A more accurate boarding time prompt can be provided according to the user's movement speed and real-time movement information.

In the above solutions, a user may be prompted in time to go to the boarding gate at a time prior to take-off, and if the boarding gate or the take-off time changes, the updated takeoff time, the updated boarding gate, and the updated remaining time from takeoff can be prompted to the user and the user can be navigated so that the user can easily cope with various unexpected situations encountered during boarding. Thus, the user can effectively avoid missing flight, which facilitates the user to make reasonable schedules and plan activities, improving user satisfaction.

## BRIEF DESCRIPTION OF THE DRAWINGS

Fig. 1 is a schematic flow chart of a boarding prompt method for an airport according to an embodiment of the present invention;
Fig. 2 is a schematic diagram of route planning in Fig. 1;
Fig. 3 is a schematic flow chart of estimating a first time period (T1) needed for completing a first route in Fig. 1;
Fig. 4 is a schematic flow diagram of estimating a second time period (T2) needed for completing a second route in Fig. 1;
Fig. 5 is a schematic diagram of a mobile service terminal for boarding prompt of an airport according to an embodiment of the present invention;
Fig. 6 (a) is a schematic diagram of an embodiment of a service push module in Fig. 5;
Fig. 6 (b) is a schematic diagram of another embodiment of the service push module in Fig. 5;
Fig. 7 is a schematic diagram of a collection module in Fig. 5;
Fig. 8 is a schematic flowchart showing a process of prompting a user to board by a mobile service terminal according to an embodiment of the present invention.

## DETAILED DESCRIPTION

In order to make the objects, technical solutions and advantages of the present invention clearer, the present invention will be further described in detail with reference to the accompanying drawings and specific embodiments. Although the accompanying drawings show exemplary embodiments of the present disclosure, it should be understood that the present disclosure may be implemented in various forms and should not be limited to the embodiments set forth herein. Rather, these embodiments are provided so that this disclosure will be thorough and complete, and will fully convey the scope of the present invention to those skilled in the art.

The embodiments of the present invention can be applied to such public places as airports and can also be applied to places such as shopping malls, exhibition halls and the like. It may typically be implemented in a computer system/server that can operate with any number of other general-purpose or special-purpose computing systems or configurations. Examples of well-known computing systems, environments and/or configurations suitable for use with the computer system/server include, but are not limited to, a personal computer system, a server computer system, a client computer, a handheld or laptop device, a microprocessor-based system, a set top box, programmable consumer electronics, a networked personal computer, a minicomputer system, a mainframe computer system, and a distributed cloud computing technology environment that includes any of the above systems.

The computer system/server may be described in the general context of computer system executable instructions that are executed by a computer system. Generally, program modules can include routines, programs, object programs, components, logic, data structures, etc. that perform particular tasks or implement particular abstract data types. The computer system/server may be implemented in a distributed cloud computing environment where tasks are performed by remote processing devices that are linked through a communications network. In the distributed cloud computing environment, program modules may be located in local or remote computing system storage media including storage devices.

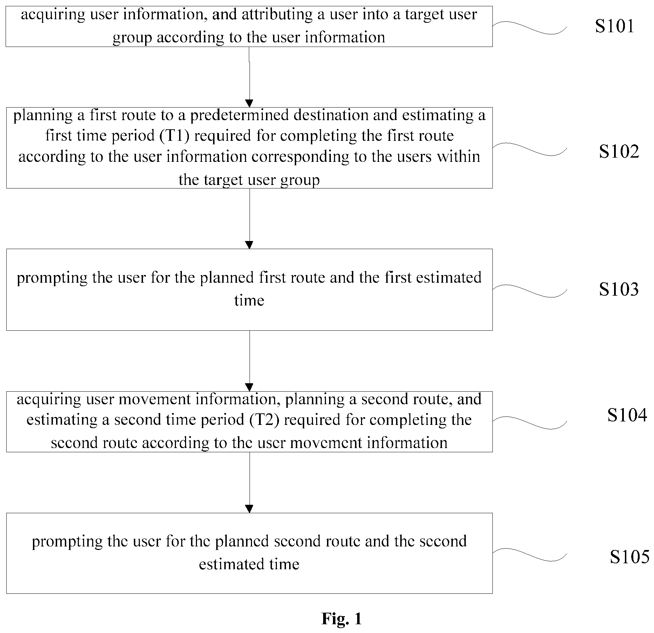

Fig. 1 is a schematic flowchart of a boarding prompt method for an airport according to an embodiment of the present invention. As shown in Fig. 1, the method includes the following steps.

In step S101, information of a user is acquired, and the user is categorized into a user group according to the user information.

In this embodiment, the user information may include identity information, flight information, historical behavior information, user movement information, and the like. The identity information may include user ID, gender, age, and the like. The flight information may include flight number, flight departure time, boarding gate, seat number and so on. The historical behavior information includes place of departure, destination, takeoff time period, seat, flight frequency, behavioral interest, and the like. This user movement information includes the user's speed, the time spent, and the like.

In this embodiment, the user information may be specifically stored in a user database, where a user may be categorized into a target user group according to user information, and the user information of the user may be stored in a corresponding target user group data packet.

In this embodiment, a mobile service terminal creates a user information folder for each user, assigns them an independent user identity number, and establishes registration data information. Registered users do not need to repeat the registration, and it is only necessary to add new information of the user to their data information.

In this embodiment, the user information may be analyzed and sorted according to identity information and historical behavior information of different users to obtain subdivided target user group databases with different dimensions. For example, the database may include the contents of a user's following attributes:

1) Age: for 60 years old below, each 10 years old is an age group; and for 60 years old above, only one age group.
2) Gender: male or female;
3) Place of departure: the province and city where the departure airport locates;
4) Destination: the region (e.g., eight major regions of North China, Central China, East China, South China, Northwest China, Northeast China, Southwest China, Hong Kong, Macao and Taiwan), province and city where the destination airport is located;
5) Takeoff time period: takeoff time of the concerned flight (for example: morning (6-12 am), afternoon (12-18 pm), and evening (18-24 pm));
6) Seat: first class or economy class;
7) Flight frequency: the number of flights of the user in the most recent year; and
8) Behavioral interests: investing and financial management, real estate, tourism, IT digital, automotive, fashion, education and training, parenting, recruiting, sports, music and television etc. (This data can be determined according to the contents browsed by users on this the mobile service terminal).

In this embodiment, users are classified into target various user groups with different attributes by storing and analyzing mass different user information data.
In this embodiment, typical user groups in the user database may include, for example:

1) High-end business group: taking more than 50 flights per year, the first class prevails, most flights by day, concerned about investment and financial management, real estate, automotive and other high-end service users; and
2) Ordinary business travel user group: taking less than 50 flights per year, the economy class prevails, most flights at night, concerned about education and training, music and television and other public service products.

In this embodiment, the user database stores user information of multiple users (for example, information folders of users A and B (belonging to high-end business person) and information folders of users C and D (belonging to ordinary business trip user)). The user database stores different target user group data packets (e.g., high-end business group data packets, young woman group data packets, geriatric group data packets, etc.). Users A and B are classified into the high-end business group. The information folders of users A and B are stored in the directory of high-end business group data packet. Users C and D are classified into the ordinary business travel user group, and information folders of users C and D are stored in the directory of ordinary business travel user group data packet.
The above user database may be adjusted as needed. For example, in order to facilitate service expansion and service requirements, the present embodiment supports custom definition of a new user group (for example, young men and women who are between the ages of 20 and 30, the flight destination of which is Hong Kong, Macao, or Taiwan, and who love travelling).
In this embodiment, a specific implementation of categorizing the user into the target user group may adopt a manual analysis method to analyze the attributes of a specific user, and then use a configuration file to match, classify and sort users possessing the same attributes.
For example, users who meet the following group attributes are defined as high-end business group: taking more than 50 flights per year, the first class prevails and the flight time occurs mostly during the day, concerned about high-end service products such as investment and financial management, real estate, and automotive. The following configurations are established in the management background:

1) Group ID: user_group001
2) Group name: high-end business travel user group
3) Group attributes:

Attribute 1: Age (30 ~ 50 years old)
Attribute 2: Gender (Unlimited)
Attribute 3: Place of departure (Unlimited)
Attribute 4: Destination (Unlimited)
Attribute 5: Takeoff time period (70% probability or higher of takeoff period between 6 am to 18 pm)
Attribute 6: Seat (70% probability or higher of first-class seats)
Attribute 7: Flight frequency (more than 50 flights per year)
Attribute 8: Behavioral interests (investment and financial management, real estate, automotive).

In this embodiment, the classification may adopt an exact matching manner. When all the characteristic attributes carried in the user information corresponding to the user are consistent with the characteristic attributes corresponding to the target user group, the user is classified into the target user group.
In the present embodiment, a fuzzy matching manner may also be used for classification. When some of the characteristic attributes contained in the user information of the user match the characteristic attributes corresponding to the target user group, whether the user is categorized into the target user group is determined according to a preset rule.

In this embodiment, the preset rule may also be that, when the proportion of the user's attributes consistent with that of the target user group is greater than a first preset value (for example, 70%), or a weight is preset for each attribute of the user, the user is attributed to the target user group when the total weight value of the attributes of the user consistent with that of the target user group is greater than a second preset value (for example, 60%).

In this embodiment, each attribute may also be preset with a weight, and when the total weight value is greater than a preset value, the matching succeeds. Various settings can be performed as needed in particular to meet personalized service requirements.

In step S102, a first route to a predetermined destination (for example, a boarding gate) is planned, and a first time period T1 needed for completing the first route is estimated according to user information corresponding to the users in the target user group.

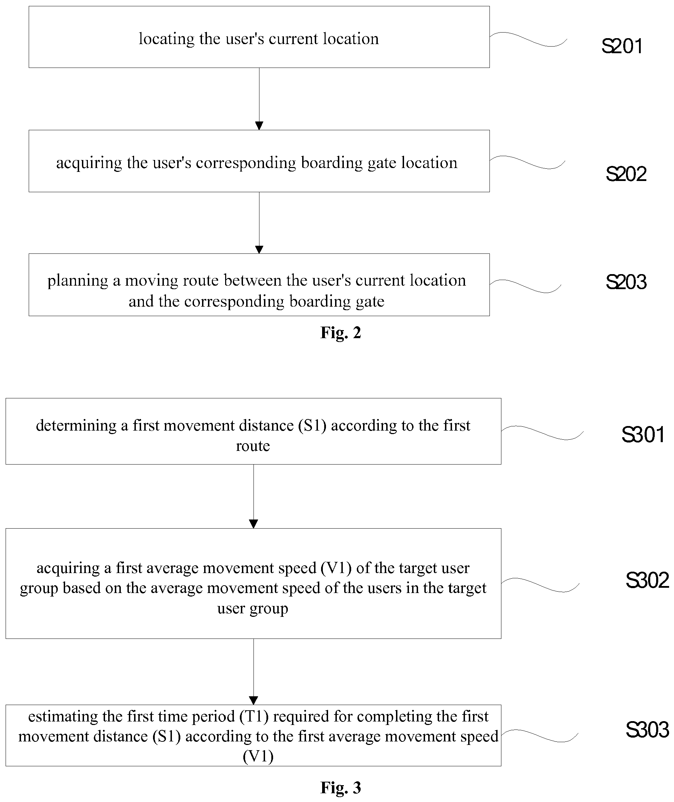

Fig. 2 is a schematic diagram of route planning in Fig. 1. As shown in Fig. 2, in the present embodiment, the process of route planning includes the following substeps.

In sub-step S201, the user's current location is determined.

In sub-step S202, the location of the boarding gate corresponding to the flight of the user is acquired.

In sub-step S203, a route from the user's current location to the boarding gate is planned.

Fig. 3 is a schematic flowchart of a method for estimating the first time period T1 needed for completing the first route in Fig. 1. As shown in Fig. 3, in the present embodiment, the step of estimating the first time period T1 needed for completing the first route includes the following sub-steps.

In sub-step S301, a first movement distance S1 is determined according to the first route.

In the present embodiment, route planning can be realized by utilizing the existing navigation function of a navigation unit. For example, according to a map of the airport where the user locates and the user's current location and boarding gate location acquired, a route between the two locations is generated and a drawn moving route is displayed.

In sub-step S302, a first average movement speed V1 of the target user group is determined based on the average movement speed of the users in the target user group.

In sub-step S303, the first time period T1 needed for completing the first movement distance S1 is estimated according to the first average movement speed (V1).

In step S103, the user is prompted for the planned first route and the first estimated time.

In the embodiment of the present invention, the first estimated time may specifically include at least one of the first time period T1 and the current time left from the takeoff.

In this embodiment of the present invention, when the user's movement information is not acquired in the initial stage or the acquired user movement information is not enough to accurately estimate the average movement speed of the user, the time needed for the user to the destination can be calculated according to the average speed of the users in the target user group to provide the user with a preliminary prompt so that the user can make reasonable schedule and plan activities according to the prompt, thus improving user experience.

In step S104, user movement information is acquired, a second route is planned, and a second time period T2 needed for completing the second route is estimated according to the user movement information.

In this embodiment, the user's movement information may be acquired and the second route may be planned within a preset time interval, where the preset time interval may be the first time period T1, or another preset time value. In the embodiments of the present invention, the preset time interval is not specifically limited herein.

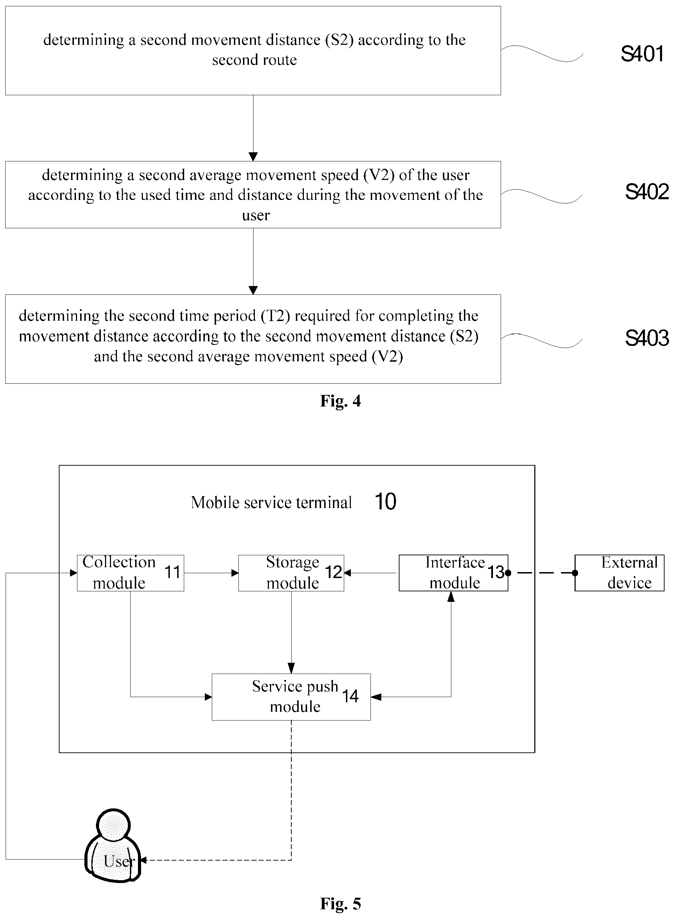

Fig. 4 is a schematic flowchart of a method for estimating the second time period T2 needed for completing the second route in Fig. 1. As shown in Fig. 4, in the present embodiment, the step of estimating the second time period T2 needed for completing the second route includes the following sub-steps.

In sub-step S401, a second movement distance S2 is determined according to the second route.

In sub-step S402, a second average movement speed V2 of the user is determined based on the used time and distance during the movement of the user.

In sub-step S403, the second time period T2 is determined according to the second movement distance S2 and the second average movement speed V2.

In step 105, the user is prompted for the planned second route and the second estimated time.

In the embodiment of the present invention, the second estimated time may specifically include at least one of the second time period T2 and the current time left from takeoff.

In an optional embodiment of the present invention, the above method may further specifically include the following steps.

In step S106, the time needed for the remaining movement distance in the planned route is displayed and/or broadcasted in real time.

In step S107, the remaining movement distance in the planned route is displayed and/or broadcasted in real time, and navigation for the user is conducted.

In the above solution, the user's identity information is acquired and added to the user database. As the collected user information increases, the user database is updated in real time, which makes the mobile service terminal keep rich and continuously updated information. The accuracy of acquiring the average movement speed V1 of the target user group based on the average movement speed (such as the walking speed) of each user in the target user group is higher, so that the accuracy of the estimated time from the user's current location to the boarding gate will be very high. On the basis of initially prompt to the user, by collecting the user's own average speed and real-time route changes, more accurate boarding time prompts can be provided.

In the above solution, the user may be prompted continuously before take-off so that the user can arrange his/her activities in the airport and board easily. If the boarding gate or the take-off time changes, the updated takeoff time, the updated boarding gate, and the updated remaining time from takeoff can be prompted to the user and navigation can be provided to the user so that the user can easily cope with various unexpected situations encountered during boarding. Thus, the user can effectively avoid flight missing, while being facilitated to make reasonable schedules, making the best of the user's time and improving user satisfaction.

Fig. 5 is a schematic diagram of a mobile service terminal for boarding prompt of an airport according to an embodiment of the present invention. Fig. As shown in Fig. 5, the mobile service terminal may include a collection module 11, a storage module 12, an interface module 13, and a service push module 14.

In this embodiment, the collection module 11 may be configured to collect user information. The user information may specifically include identity information, flight information, historical behavior information, and movement information. The identity information includes user ID, gender, age, and the like. The flight information includes flight number, flight departure time, boarding gate, seat number and so on. The historical behavior information includes place of departure, destination, takeoff time, seat, flight frequency, behavioral interest, and the like. This user movement information includes the user's speed, the time spent, and the like.

In this embodiment, the storage module 12 may be configured to store user information. The storage module may store user information through a user database, where the user database stores user information of multiple users, and the user information is classified into data packets corresponding to different target user groups based on characteristic attributes of the user.

In this embodiment, the interface module 13 may be configured to acquire user database and/or resource information from an external device. The external device may be a background server or a third-party server that provides data support for the mobile service terminal, for example, an airport background system, through which system, the mobile service terminal may obtain resource information of the user's concerned aircraft, such as flight number, airline, departure date, place of departure, destination, planned departure time, planned arrival time, flight status, boarding gate, transit or stopover.

In this embodiment, the service push module 14 may be configured to plan a first route, estimate a first time period T1 needed for completing the first route, and prompt the user to go boarding at a preset time before the first time period T1 before boarding; plan a second route on the way of the user's boarding, and estimate a second time period T2 needed for completing the second route; display and/or broadcast the time needed for remaining movement distance in the planned route in real time, display and/or broadcast the remaining movement distance in the planned route in real time, and navigate the user's way.

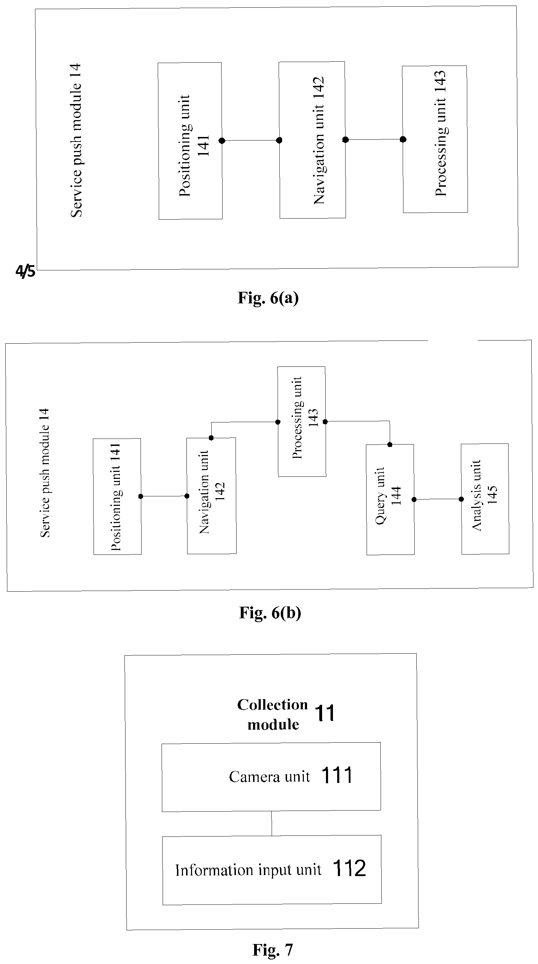

Fig. 6 (a) is a schematic diagram of an embodiment of the service push module in Fig. 5. As shown in Fig. 6 (a), the service push module 14 may include a positioning unit 141, a navigation unit 142, and a processing unit 143.

In the present embodiment, the positioning unit 141 can be configured to determine the current location of the user and the location of the boarding gate corresponding to the user's flight. The positioning unit can adopt a variety of technologies such as wireless communication, base station positioning and inertial navigation positioning to form a set of indoor location positioning systems so as to realize the positioning of personnel, objects and the like in an interior space.

In the present embodiment, the navigation unit 142 can be configured to plan a route from the current location of the user to the boarding gate corresponding to the user's flight, and provide a navigation service. For example, Wi-Fi can be used for indoor positioning and navigation. The existing commercially available navigation unit can be adopted to complete the function, which will not be described here again

The processing unit 143 is configured to calculate distance, time, and speed parameters, push service content to the user, and update the pushed content in real time.

In this embodiment, the processing unit 143 may be, for example, a single-chip computer or a processor including an FPGA chip.

Fig. 6 (b) is a schematic diagram of another embodiment of the service push module in Fig. 5. Fig. As shown in Fig. 6 (b), the service push module 14 may include a positioning unit 141, a navigation unit 142, a processing unit 143, a query unit 144 and an analysis unit 145. The similar portions of the two embodiments in Fig. 6 will not be described again, while only the differences between the two embodiments will be described herein.

In this embodiment, the public place is an airport, and the predetermined destination is a boarding gate.

The analysis unit 145 is configured to extract the user's characteristic attributes according to the collected user information, and match the user with the characteristic attributes of the target user group according to the characteristic attributes.

The query unit 144 is configured to query an average movement speed of the user from the data packet corresponding to the target user group stored by the storage module and query the updated departure time point and the updated boarding gate information from external resource through the interface module.

The processing unit 143 may be further configured to prompt the user to go to the boarding gate at a preset time point within the first time period (T1).

Fig. 7 is a schematic diagram of the collection module in Fig. 5. As shown in Fig. 7, the collection module 11 includes a camera unit 111 and an information input unit 112.

In this embodiment, the camera unit 111 is configured to collect the user's identity information.

In this embodiment, the information input unit 112 is configured to collect information input by the user. For example, the information input unit 112 may be a touch screen unit.

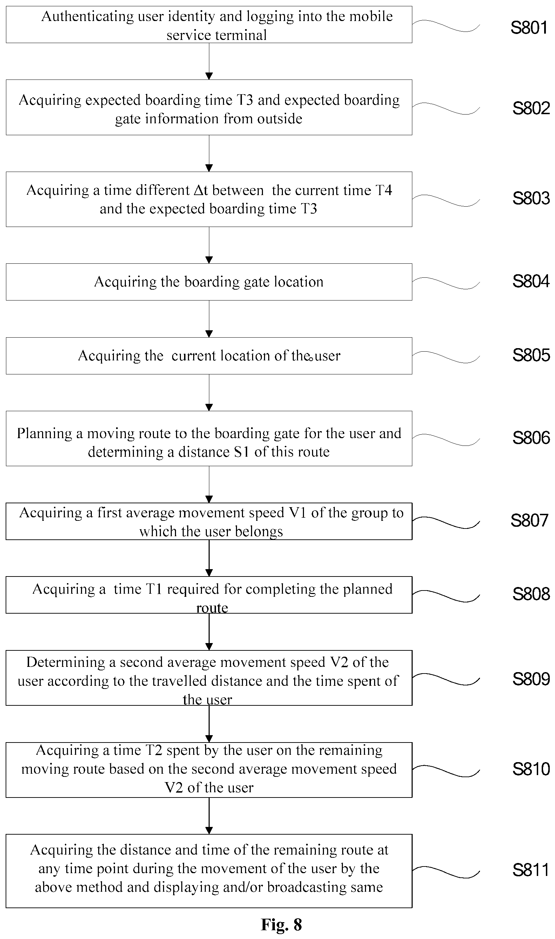

Fig. 8 is a schematic flowchart of a mobile service terminal prompting a user to board according to an embodiment of the present invention. This embodiment takes a 40-year-old middle-aged male user taking an airport plane as an example, and specifically describes a specific implementation of the mobile service terminal prompting the user to board.

First, the user is prompted to board the flight.

In step S801, the user's identity is authenticated and the mobile service terminal is logged in.

In the present embodiment, a middle-aged male user enters the airport and acquires a mobile service terminal, which can be placed on a trolley carrying luggage. The user's identity is authenticated according to user information. For example, the user's identity can be authenticated through the boarding pass, ID and passport, phone number, face and voiceprint, etc., thus logging in the system. (The mobile service terminal can also be used in large public places such as shopping malls, etc. When it is used in a shopping mall, this system can be accessed by scanning or entering the shopping mall's membership card.)

In step S802, an expected boarding time T3 and expected boarding gate information are acquired from outside.

In this embodiment, the mobile service terminal connects to a third-party server, for example, an airport iTC (Airport Data Center) through a background server, and obtains the expected boarding time T1 and the expected boarding gate (e.g., A123) information corresponding to the flight number.

In step S803, a time difference $\Delta t$ between the current time T4 and the preset boarding time T3 is acquired, in minutes.

In step S804, the boarding gate location is acquired.

In this embodiment, the mobile service terminal includes a map resource of the current airport and a POI (Point of Interest) database. The POI database stores key location object information in the airport, for example, boarding gates, merchants, public facilities and so on. Each POI data contains the following fields: name, category, and spatial location coordinates. For example: for a given boarding gate A123, the storage form in the POI database is:

Name: A123

Category: Boarding gate

Coordinates: (210,342,3)

After the mobile service terminal acquires the boarding gate corresponding to the flight from the iTC, the POI information of the boarding gate is found in the boarding gate category of the POI database, and the location of the boarding gate in the map is determined through the spatial location coordinates.

In step S805, the current location of the user is acquired.

In this embodiment, an indoor positioning device built in the mobile service terminal acquires the spatial location coordinates of the user's current location so as to determines the current location of the user in the map.

In step S806, a moving route of the user to the boarding gate is planned, and the distance S1 of the route is determined.

In this embodiment, one or more moving routes may be planned, an optimal moving route with the shortest distance may be selected, and the distance S1 of the planned route may be calculated.

In step S807, the first average movement speed V1 of the group is obtained.

Taking into account that the walking speed will be different greatly due the difference of the user's gender and age, different initial speed values need to be preset for different user groups. V1 is determined as follows:

According to the principle of biology, a plurality of user groups are oriented through 2 dimension of the user's gender and age, and an average movement speed matching the characteristics of each group is preset for each group and stored in the mobile service terminal.

For example,

Young men (male, 18-30 years old), average movement speed (V1 = 1.1m/s)

Young women (female, 18-30 years old), average movement speed (V1 = 1.0m/s)

Middle-aged men (male, 31-50 years old), average movement speed (V1 = 1.0m/s)

Middle-aged women (female, 31-50 years old), average movement speed (V1 = 0.9m/s)

Older people (gender unlimited, 50 years old +), average movement speed (V1 = 0.8m/s)

In this embodiment, the first average movement speed of the target user group may also be acquired according to the collected user information. Specifically, the first average movement speed of the target user group may be calculated according to the collected speeds of multiple users, and the accuracy of the data becomes higher as the amount of collected data increases.

The user scans the boarding pass when he or she logs in the system. The system obtains the basic identity information of the user from a third-party public service platform by parsing the boarding pass information (two items are used in this example: user gender and user age). By comparing the preset information in the mobile service terminal, the first average movement speed V1 of the group is obtained.

In step S808, a time T1 needed for completing the planned route is acquired, in minutes.

$$T1 = S1/V1$$

When Δt-T3 is less than a preset time value, the user is prompted to go to the boarding gate, the distance S1 of the moving route and the time T1 needed for completing the planned route are displayed and/or broadcasted, and navigation is performed.

Secondly, the user is prompted in real time for the boarding information and navigation service is provided to the user on the way of the user to the boarding gate.

In step S809, a second average movement speed V2 of the user is determined according to the distance traveled by the user and the time spent.

In this embodiment, during the use by the user, the mobile service terminal can obtain the location information of the user through a built-in positioning unit, such as once every 30 seconds to form the user's movement track. According to the track length (the distance of the moving route) and the time consumed to complete the distance, the second average movement speed V2 of the current movement of the user can be calculated.

In this embodiment, the second average movement speed V1 of the group and the average movement speed V2 of the user may be averaged to improve the accuracy of the speed.

In step S810, the time T2 spent by the user on the remaining moving route is acquired based on the second average movement speed V2 of the user.

In step S811, the distance and the time of the remaining moving route at any time point during the movement of the user is acquired by the above method and displayed and/or broadcasted.

In this embodiment, the user may be prompted and guided according to a preset prompting rule:
When Δt-T1 is less than or equal to 30 minutes, 20 minutes or 10 minutes, a popup window of boarding prompt is popped up on a user interface of the mobile service terminal to inform the user to go to the boarding gate, and at the same time, on the user interface of the mobile service terminal, a map route preview from the current location to the boarding gate and the navigation service are provided.

When Δt-T1 is less than or equal to 10 minutes, the boarding prompt popup window continues to be displayed on the user interface of the mobile service terminal until the user arrives near the boarding gate.

In this embodiment, the mobile service terminal can update the content of the prompt in time according to the change of the external environment. There are specifically the following two points.

First of all, when the user uses boarding gate navigation, the system automatically recalculates the route distance and the time needed to reach the boarding gate as the user's location changes, and prompts the user according to the above prompting rule.

Secondly, the mobile service terminal connects to a third-party public service system through a background server system to obtain the expected boarding time and boarding gate. Since the mobile service terminal requests the background server for the flight's latest information every fixed time (for example, 60 seconds), the background server will return the latest information obtained from the third-party server (for example, airport iTC) to the mobile service terminal. The mobile service terminal compares the received flight data with the last received data. If it is found that the expected boarding time and/or the boarding gate changes, a boarding prompt pop-up window will be popped up actively to inform the flight status or expected boarding time or boarding gate change.

For example, the method for determining the current location of the user and the route and distance can be found in Chinese Patent Application No. 201310350209.6, entitled "Target Positioning Method and System", Chinese patent application No. 201410277471.7, entitled "Target Immediate Positioning and Map Construction Method and System", and Chinese patent application 201410653839.5, entitled "Airport Mobile Self-service Method and System ", which are hereby incorporated by reference in its entirety.

The above is only some embodiments of the present invention. For those skilled in the art, many variations and improvements may be made without departing from the concept of the present invention, all of which are within the protection scope of the present invention.

**Claims**

1. An information prompting method for a public place, comprising:

   acquiring (S101) user information, and categorizing a user into a target user group according to the user information;
   planning (S102) a first route to a predetermined destination and estimating a first time period (T1) needed for completing the first route according to the user information corresponding to the users within the target user group;
   prompting (S103) the user for the planned first route and the first estimated time;
   acquiring (S104) user movement information, planning a second route, and estimating a second time period (T2) needed for completing the second route according to the user movement information; and

prompting (S105) the user for the planned second route and the second estimated time.

2. The method according to claim 1, wherein the public place is an airport, the predetermined destination is a boarding gate, and the method further comprises:

displaying and/or broadcasting the remaining planned route distances and/or altered boarding gates and/or modified takeoff time and/or remaining time from takeoff in real time, and navigating the user.

3. The method according to claim 1, wherein estimating the first time period (TI) needed for completing the first route comprises:

determining (S301) a first movement distance (S1) according to the first route;
acquiring (S302) a first average movement speed (V1) of the target user group based on the average movement speed of the users in the target user group; and
estimating (S303) the first time period (T1) needed for completing the first movement distance (S1) according to the first average movement speed (V1).

4. The method according to claim 1, wherein estimating the second time period (T2) needed for completing the second route comprises:

determining (S401) a second movement distance (S2) according to the second route;
determining (S402) a second average movement speed (V2) of the user according to the used time and distance during the movement of the user; and
determining (S403) the second time period (T2) needed for completing the movement distance according to the second movement distance (S2) and the second average movement speed (V2).

5. The method according to claim 2, wherein planning the first route and planning the second route comprise:

locating (S201) the user's current location;
acquiring (S202) the user's corresponding boarding gate location; and
planning (S203) a moving route between the user's current location and the corresponding boarding gate.

6. The method according to any one of claims 1 to 5, wherein
the classification adopts an exact matching manner, and when all characteristic attributes carried in the user information meet characteristic attributes corresponding to the target user group, the user is classified into the target user group; or
the classification adopts a fuzzy matching manner, and when some of the characteristic attributes contained in the user information match the characteristic attributes corresponding to the target user group, whether the user belongs to the target user group is determined according to a preset rule.

7. The method according to claim 2, further comprising:
sending a prompt to the user when a time difference ($\Delta T1$) between the current time and the boarding time and a time ($\Delta T2$) necessary for going from the user's current location to the boarding gate has a difference less than or equal to a preset time value.

8. A mobile service terminal for a public place, comprising:

a collection module (11) configured to collect user information;
a storage module (12) configured to store the user information, the user information being attributed into different target user group data packets based on a user's characteristic attributes;
an interface module(13) configured to perform data exchange with an external device according to the collected user information to acquire user database and/or resource information; and
a service push module (14) configured to plan a first route to a predetermined destination for a user, to estimate a first time period (TI) needed for completing the first route, and to plan a second route during the travel in the first route, to estimate a second time period (T2) needed for completing the second route; and to prompt in real time for the remaining movement distance and/or the time needed in the walking route, and to provide route guidance for the user.

9. The mobile service terminal according to claim 8, wherein the service push module comprises:

a positioning unit (141) configured to get a current location of the user and determine a location of the predetermined destination;
a navigation unit (142) configured to plan a moving route between the user's current location and the predetermined destination, and provide navigation information prompts; and
a processing unit (143) configured to acquire current time information and estimate the time needed for completing the moving route according to the attributes of the user, so as to prompt the estimated time in real time.

10. The mobile service terminal according to claim 8, wherein the public place is an airport, the predetermined destination is a boarding gate, and the service push module (14) further comprises:

an analysis unit (145) configured to extract the characteristic attributes of the user according to the collected user information and match the user with the characteristic attributes of the target user group according to the characteristic attributes; and

a query unit (144) configured to query an average movement speed of the user from the data packet corresponding to the target user group stored by the storage module and query the updated flight departure time point and the updated boarding gate information from external resource through the interface module.

11. The mobile services terminal according to claim 10, wherein the processing unit is further configured to prompt the user to go to the boarding gate at a preset timing within the first time period (T1).

EP 3 355 264 A1

acquiring user information, and attributing a user into a target user group according to the user information — S101

planning a first route to a predetermined destination and estimating a first time period (T1) required for completing the first route according to the user information corresponding to the users within the target user group — S102

prompting the user for the planned first route and the first estimated time — S103

acquiring user movement information, planning a second route, and estimating a second time period (T2) required for completing the second route according to the user movement information — S104

prompting the user for the planned second route and the second estimated time — S105

**Fig. 1**

11

locating the user's current location — S201

acquiring the user's corresponding boarding gate location — S202

planning a moving route between the user's current location and the corresponding boarding gate — S203

**Fig. 2**

determining a first movement distance (S1) according to the first route — S301

acquiring a first average movement speed (V1) of the target user group based on the average movement speed of the users in the target user group — S302

estimating the first time period (T1) required for completing the first movement distance (S1) according to the first average movement speed (V1) — S303

**Fig. 3**

determining a second movement distance (S2) according to the second route

S401

determining a second average movement speed (V2) of the user according to the used time and distance during the movement of the user

S402

determining the second time period (T2) required for completing the movement distance according to the second movement distance (S2) and the second average movement speed (V2)

S403

**Fig. 4**

Mobile service terminal  **10**

Collection module **11**

Storage module **12**

Interface module **13**

External device

Service push module **14**

User

**Fig. 5**

**Fig. 6(a)**

**Fig. 6(b)**

**Fig. 7**

| | |
|---|---|
| Authenticating user identity and logging into the mobile service terminal | S801 |
| Acquiring expected boarding time T3 and expected boarding gate information from outside | S802 |
| Acquiring a time different Δt between the current time T4 and the expected boarding time T3 | S803 |
| Acquiring the boarding gate location | S804 |
| Acquiring the current location of the user | S805 |
| Planning a moving route to the boarding gate for the user and determining a distance S1 of this route | S806 |
| Acquiring a first average movement speed V1 of the group to which the user belongs | S807 |
| Acquiring a time T1 required for completing the planned route | S808 |
| Determining a second average movement speed V2 of the user according to the travelled distance and the time spent of the user | S809 |
| Acquiring a time T2 spent by the user on the remaining moving route based on the second average movement speed V2 of the user | S810 |
| Acquiring the distance and time of the remaining route at any time point during the movement of the user by the above method and displaying and/or broadcasting same | S811 |

**Fig. 8**

# INTERNATIONAL SEARCH REPORT

| International application No. |
| --- |
| PCT/CN2016/099396 |

**A. CLASSIFICATION OF SUBJECT MATTER**

G06Q 50/30 (2012.01) i

According to International Patent Classification (IPC) or to both national classification and IPC

**B. FIELDS SEARCHED**

Minimum documentation searched (classification system followed by classification symbols)

G06Q, G01C

Documentation searched other than minimum documentation to the extent that such documents are included in the fields searched

Electronic data base consulted during the international search (name of data base and, where practicable, search terms used)

CNPAT, EPODOC, WPI, CNKI: feature, plan, circuit, remind, group, identity, adjust, user, navigat+, trail, history, group, information, route, behavior

**C. DOCUMENTS CONSIDERED TO BE RELEVANT**

| Category* | Citation of document, with indication, where appropriate, of the relevant passages | Relevant to claim No. |
| --- | --- | --- |
| PX | CN 105118015 A (CHIGOO INTERACTIVE TECHNOLOGY CO., LTD.), 02 December 2015 (02.12.2015), claims 1-10, and description, paragraphs [0031]-[0097] | 1-11 |
| Y | CN 104463761 A (CHIGOO INTERACTIVE TECHNOLOGY CO., LTD.), 25 March 2015 (25.03.2015), description, paragraphs [0034]-[0043], [0058]-[0070] and [0075]-[0076] | 1-11 |
| Y | CN 104165634 A (GUANGZHOU CVT ELECTRONICS TECHNOLOGY CO., LTD.), 26 November 2014 (26.11.2014), description, paragraphs [0032]-[0056] | 1-11 |
| A | US 2012010807 A1 (TELENAV, INC.), 12 January 2012 (12.01.2012), the whole document | 1-11 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 October 2016 (21.10.2016) | **30 November 2016 (30.11.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **TIAN, Jing** Telephone No.: (86-10) **62413701** |
| --- | --- |

Form PCT/ISA/210 (second sheet) (July 2009)

## INTERNATIONAL SEARCH REPORT
### Information on patent family members

International application No.

**PCT/CN2016/099396**

| Patent Documents referred in the Report | Publication Date | Patent Family | Publication Date |
|---|---|---|---|
| CN 105118015 A | 02 December 2015 | None | |
| CN 104463761 A | 25 March 2015 | WO 2016078395 A1 | 26 May 2016 |
| CN 104165634 A | 26 November 2014 | None | |
| US 2012010807 A1 | 12 January 2012 | CN 103097862 A | 08 May 2013 |
| | | WO 2012005971 A1 | 12 January 2012 |

Form PCT/ISA/210 (patent family annex) (July 2009)

## EP 3 355 264 A1

**REFERENCES CITED IN THE DESCRIPTION**

**Patent documents cited in the description**

- CN 201410653839
- CN 201430296729
- CN 201320012580
- CN 201310350209
- CN 201410277471